**Europäisches Patentamt**

**European Patent Office**

**Office européen des brevets**

(19)

(11) Publication number: **0 172 648**
**A1**

## (12) EUROPEAN PATENT APPLICATION

(21) Application number: **85305019.3**

(22) Date of filing: **15.07.85**

(51) Int. Cl.⁴: **B 65 G 53/56**

(30) Priority: **23.07.84 GB 8418691**

(43) Date of publication of application:
**26.02.86 Bulletin 86/9**

(84) Designated Contracting States:
**BE DE FR IT**

(71) Applicant: **British Nuclear Fuels PLC**

**Risley Warrington Cheshire, WA3 6AS(GB)**

(72) Inventor: **Sperinck, William Alfred
1, Cromdale Way Great Sankey
Warrington Cheshire(GB)**

(74) Representative: **Owen, Geoffrey John et al,
Patents Branch United Kingdom Atomic Energy
Authority 11 Charles II Street
London SW1Y 4QP(GB)**

(54) **Pneumatic conveyor.**

(57) For use in a pneumatic conveyor, an apparatus for establishing communication between a main conduit (2;50) and each of a plurality of branch conduits (4,5;52). The apparatus comprises a body housing (1) a connection conduit (7;54), one end of the connection conduit (7;54) having a swivel connection with the main conduit (2;50). The connection conduit (7;54) is shaped such that its opposite end moves in an arcuate path across ports in communication with the branch conduits (4,5;52). Drive means (12;67) for effecting movement of the connection conduit (7;54) are mounted in the body (1).

EP 0 172 648 A1

./...

Croydon Printing Company Ltd.

*Fig. 1.*

## Improvements in or relating to pneumatic conveyors

The present invention concerns pneumatic conveyors and in particular to apparatus for establishing communication between a first conduit and each of a plurality of second conduits.

Pneumatic conveyor or transfer systems can be used for conveying objects between stations. As an example, it is possible to utilise such a system to interconnect a central laboratory with a number of out-stations for the conveyance of samples. The paths of travel between the laboratory and the out-stations can be provided by conduits in which a main line from the laboratory can split into a number of branch lines each leading to a different out-station. Consequently, it is required to provide apparatus for establishing communication between the main line and any one of the branch lines.

According to the present invention an apparatus for establishing communication between a first conduit and each of a plurality of second conduits comprises a body having a port at one end for connection to the first conduit and a plurality of ports at its opposite end each for connection to a respective second conduit, a connection conduit within the body, one end of the connection conduit having a swivel connection with the port at said one end of the body, the connection conduit being shaped such that the opposite end thereof is movable in an arcuate path between the ports at the opposite end of the body, and drive means for effecting such movement of the connection conduit.

Conveniently, the ports at the opposite end of the body for connection to the second conduits are disposed in a circle about the axis of the body.

The invention will be described further, by way of example, with reference to the accompanying drawings; in which:-

Figure 1 is an axial section of a first embodiment of an apparatus for establishing communication between a first conduit and a pair of second conduits and taken on A-A in Fig. 2;

Figure 2 is an end view of the apparatus on the arrow B in Fig. 1;

Figure 3 is an axial section of a second embodiment of an apparatus according to the invention;

Figure 4 is a section on C-C in Fig. 3; and

Figure 5 is an end view on the arrow D in Fig. 3.

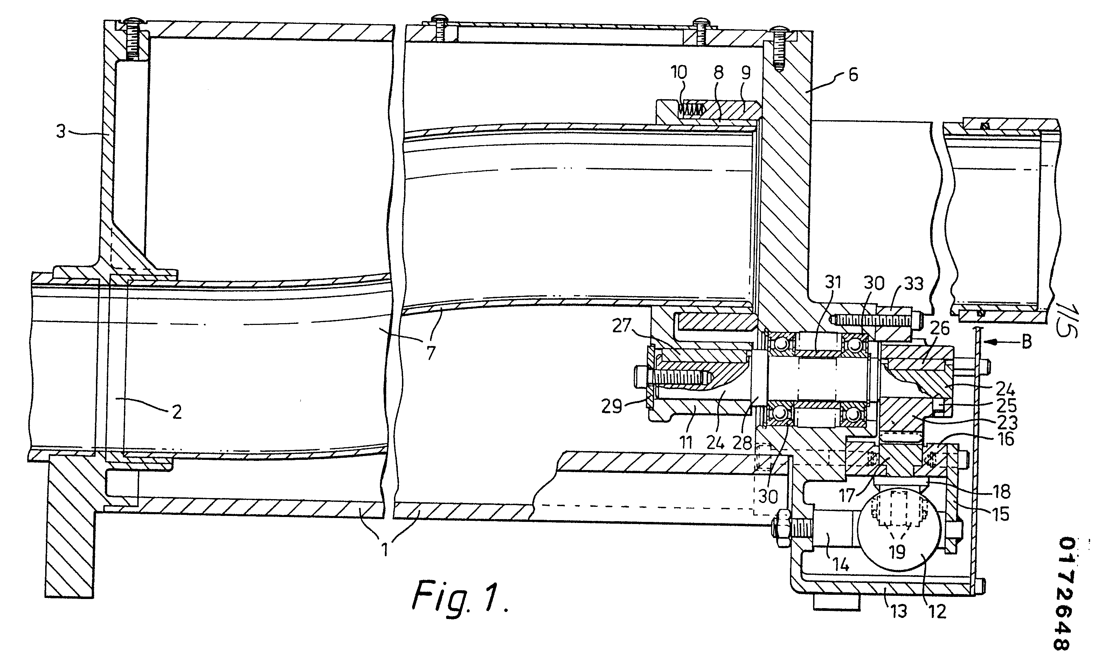

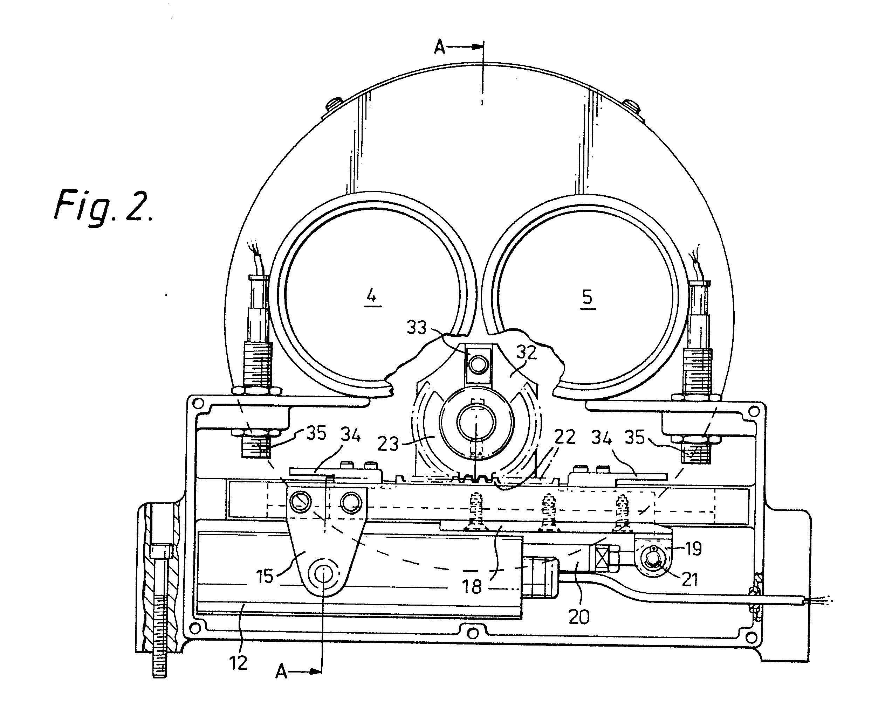

The apparatus in Figs. 1 and 2 comprises a cylindrical hollow body 1 having a port or opening 2 in one end wall 3 and two similar ports or openings 4, 5 in its opposite end wall 6. The ports 4, 5 are symmetrically positioned about a diameter and offset wit respect to the port 2. One end of a conduit 7 forms a swivel connection at the port 2 and the opposite end of the conduit 7 terminates in close proximity to the opposite end wall 6. A sleeve 8 is fixedly mounted on the end of the conduit 7 at the wall 6, the sleeve in turn carrying a slidable sealing ring 9 which is urged by a spring 10 into contact with the end wall 6. The spring 10 is arranged between the ring 9 and a flange on the sleeve. A bush 11, integral with the flange, depends from the sleeve 8.

An actuator 12, which can be an electro-mechanical device, is pivotally supported within a housing 13 at the lower end of the plate 6. The actuator is supported by a pivot pin 14 secured in a wall of the housing and by a pivot bracket 15 which depends from a guide 16 which is fixedly mounted on the wall of the housing. The guide 16 has a substantially T-shaped slot to receive a slide 17. A plate 18 carrying a clevis 19 is secured to the base of the slide and an actuating rod 20 from the actuator 12 is linked to the clevis 19 by a pin 21. The upper surface of the slide 17 carries a rack 22 which meshes with a pinion 23 fixed on a shaft 24 by a screw 25 and a key 26. The shaft 24 extends through the wall 6 and is received within the bush 11. The bush 11 is secured to rotate with the shaft 24 to thereby pivot the sleeve 8 and the conduit 7 by means of a key 27. Axially, the bush 11 is positioned between a boss 28 on the shaft and a stop 29 secured at the end of the shaft 24. The shaft 24 is supported within the bore in the wall 6 by means of ball bearing assemblies 30 separated by a spacer tube 31.

In operation, the rod 20 is reciprocated by the actuator 12 to oscillate the shaft 24 through the rack and pinion drive connection. As seen in Fig. 2, the pinion 23 is formed with an arcuate cut-out 32 the end faces of which cooperate with a block 33 mounted on the wall 6. The block 33 functions as a stop and is positioned such that when each end face in the cut-out 32 abuts against the block the conduit 7 is accurately aligned with the respective port 4, 5 in the wall 6. The shaft 24 is in axial alignment with the port 2. Due to the configuration of the conduit 7, the end thereof adjacent the wall 6 moves in an arc between the ports 4, 5 and the opposite end of the conduit swivels in its support at the port 2. Sensors 34 mounted on the slide 18 cooperate with proximity switches 35 and are arranged such that when an end face on the pinion engages the block 33 the appropriate sensor activates its proximity switch to disengage the actuator 12.

The apparatus can be installed in a conveyor system in which objects are propelled pneumatically along conduits between stations, for example a central laboratory and remote work stations. A conduit providing a path of travel is connected to the port 2 in the wall 3 and likewise conduits are connected to the ports 4, 5 in the wall 6. Selective operation of the apparatus provides communication through the conduit 7 between the conduit at the port 2 and either the conduit at the port 4 or the conduit at the port 5.

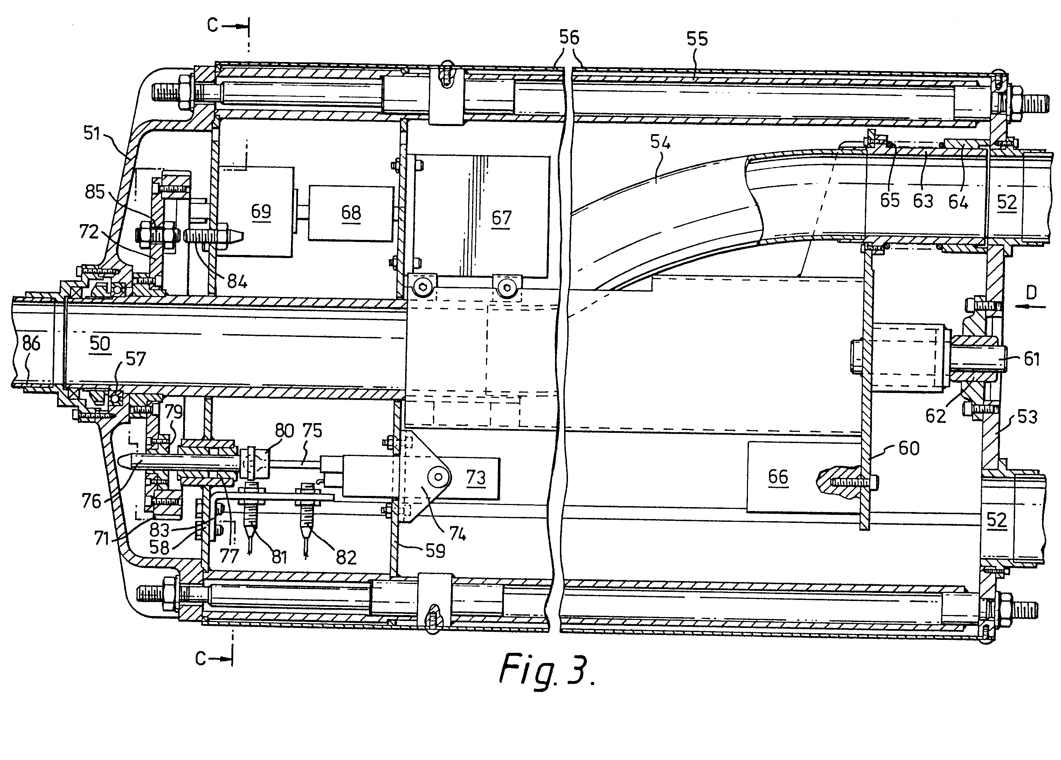

Figs. 3, 4 and 5 illustrate an alternative embodiment which establishes selective communication between a single port 50 positioned centrally in an end wall 51 and any one of eight ports 52 in an opposite end wall 53, the ports 52 being disposed about the axis of the apparatus at a common radius. Communication between the port 50 and any one of the ports 52 is provided by a conduit 54. The walls 51 and 53 are connected by tie-bars 55 within a cover 56.

At the port 50, the end of the conduit 54 is supported for swivelling by ball-bearing races 57. The conduit 54 passes through apertures in plates 58 and 59 and extends to an aperture positioned adjacent the periphery of a disc 60 which is provided with a spindle 61 journalled for rotation in a bearing 62 at the centre of the wall 53. The aperture in the disc 60 is at the same radius from the axis of the apparatus as the ports 52 in the end wall 53. An extension piece 63 secured to the disc 60 extends the conduit 54 to terminate adjacent the wall 53. The extension piece 63 carries a slidable collar 64 which is urged by a spring 65 into engagement with the wall 53. The disc 60 further carries a counter-balance weight 66 at a position diametrically opposite the end of the conduit 54.

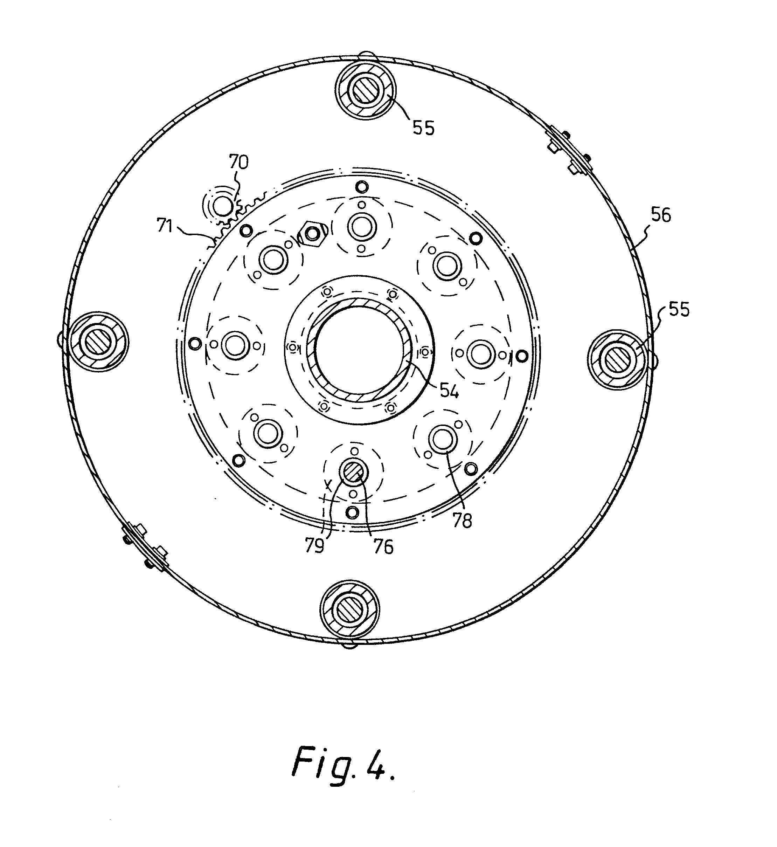

The plate 59 supports a drive motor 67, the drive shaft of the motor being connected by a coupling 68 to a gearbox 69 mounted on the plate 58. The output shaft of the gearbox carries a cog 70 (Fig. 4) which meshes with a ring gear 71 mounted on a plate 72 fixedly secured to the conduit 54. Thus, drive from the motor 67 is transmitted to the conduit 54 to rotate the conduit 54 to cause the extension piece 63 to move between the ports 52.

An actuator 73 is pivotally mounted between brackets 74 secured to the plate 59. The actuator 73 functions to reciprocate a rod 75 terminating in a bolt 76, the bolt 76 being slidable within a bush 77 extending through the plate 58. The plate 72 is formed with a plurality of equi-angularly spaced apart apertures 78 (Fig. 4) arranged in a circle centred on the axis of the apparatus and the centres of the apertures 78 being at a radius equal to the distance between the axis of the bolt 76 and the axis of the apparatus. Each aperture 78 has a bush 79 to receive the bolt 76. The number of apertures 78 in the plate 72 is equal to the number of ports 52 in the end wall 53. The actuating rod 75 further carries a sensor 80 which coperates with first and second proximity switches 81 and 82 respectively carried on a bracket 83 extending from the plate 58.

A further eight proximity switches 84 are equi-angularly spaced apart on the plate 58 at a pitch circle to cooperate with a sensor 85 on the plate 72.

In operation and to rotate the conduit 54 the bolt 76 is withdrawn from its position shown in Fig. 3 by means of the actuator 73. The withdrawn position of the bolt is detected by the proximity switch 82 which initiates a signal to actuate the drive motor 67. The motor 67 rotates the plate 72 and hence the conduit 54 through an arc to bring the sensor 85 into alignment with a selectively actuated proximity switch 84. The resulting signal deactivates the drive motor 67 and triggers the actuator 73 to shoot the bolt into the aperture 78 in the plate 72 which corresponds to the selected proximity switch 84. In this engaged position the bolt locks the plate 72 and the conduit against further movement and the sensor 80 on the actuating rod 75 triggers the proximity switch 81 to signal completion of the cycle. In this position the extension piece 63 at the end of the conduit 54 is in accurate alignment with a desired one of the ports 52 in the end wall 53.

As in the case of the embodiment of Figs. 1 and 2, the apparatus can be installed in a pneumatic conveyor system for establishing a path of travel between a conduit 86 connected to the port 50 in the end wall 51 and conduits 87 connected to the ports 52 in the opposite end wall 53.

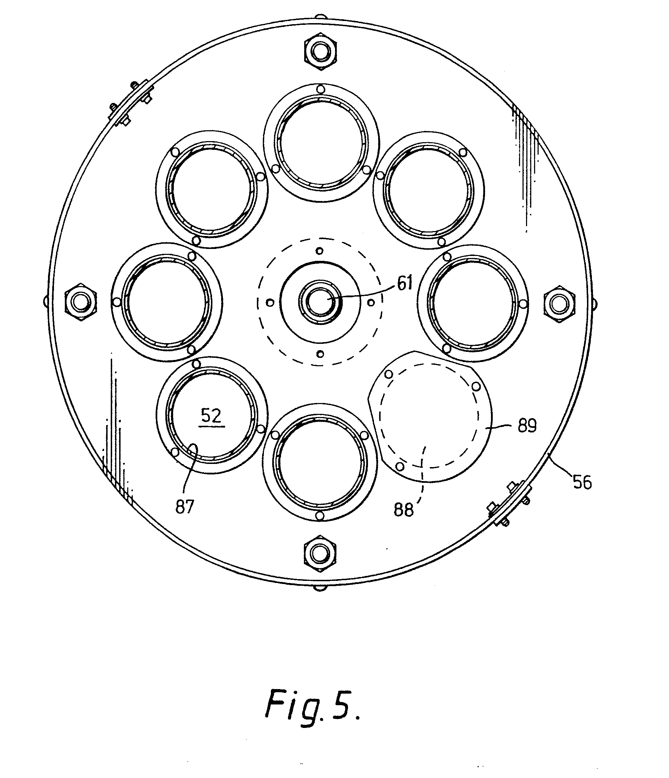

As seen in Fig. 5, one of the ports 52 in the end wall 53 and denoted by the reference numeral 88 is of larger diameter than the remaining ports and is closed by a removable cover or plug 89. The port 88 can be employed for maintenance work and is such that the collar 64 can be withdrawn therethrough upon removal of the plug 89.

Claims

1. Apparatus for establishing communication between a first conduit and each of a plurality of second conduits characterised by a body (1) having a port (2) at one end (3) for connection to the first conduit and a plurality of ports (4, 5) at its opposite end (6) each for connection to a respective second conduit, a connection conduit (7) within the body, one end of the connection conduit (7) having a swivel connection with the port (2) at said one end (3) of the body, the connection conduit (7) being shaped such that the opposite end thereof is movable in an arcuate path between the ports at the opposite end (6) of the body, and drive means (12) for effecting such movement of the connection conduit.

2. An apparatus according to Claim 1 characterised in that the drive means comprises a reciprocable linear actuator (12) operable to oscillate a shaft (24) journalled in the opposite end (6) of the body, the shaft (24) being secured for rotation to said opposite end of the connection conduit whereby to effect the arcuate movement of the connection conduit.

3. An apparatus according to Claim 2 characterised by stop means (33) operable to determine the extent of arcuate movement of the connection conduit.

4. An apparatus according to Claim 3 characterised by control means (34, 35) operable to disengage the actuator upon operation of the stop means.

5. An apparatus according to Claim 1 characterised in that the ports (52) at the opposite end (53) of the body for connection to the second conduits are disposed in a circle about the axis of the body.

6. An apparatus according to Claim 5 characterised in that the drive means comprises a drive motor (67) to rotate a cog (70) in engagement with a ring gear (71) mounted on the connection conduit (54).

7. An apparatus according to Claim 6 characterised by stop means (76) operable to selectively engage and arrest the movement of the connection conduit in a position at any one of the ports (52) in the opposite end of the body.

8. An apparatus according to Claim 7 characterised by switch means (81, 82, 84) operable to control operation of the drive means and the stop means.

30531

Fig. 1.

Fig.2.

0172648

Fig. 3.

*Fig.4.*

Fig.5.

European Patent Office

# EUROPEAN SEARCH REPORT

**0172648**
Application number

## DOCUMENTS CONSIDERED TO BE RELEVANT

EP 85305019.3

| Category | Citation of document with indication, where appropriate, of relevant passages | Relevant to claim | CLASSIFICATION OF THE APPLICATION (Int. Cl 4) |
|---|---|---|---|
| X | CH - A - 440 125 (VEB FÖRDERTECH-NIK FREITAC)  .* Totality; especially fig. 5,6 * | 1,2,5,7 | B 65 G 53/56 |
| X | DE - B - 1 456 761 (CLAUDIUS PETERS AG)  * Totality * | 1,5 | |

**TECHNICAL FIELDS SEARCHED (Int. Cl 4)**

B 65 G

The present search report has been drawn up for all claims

| Place of search | Date of completion of the search | Examiner |
|---|---|---|
| VIENNA | 23-10-1985 | PISSENBERGER |